(19) Europäisches Patentamt
European Patent Office
Office européen des brevets

(11) Publication number: **0 483 510 A2**

(12) **EUROPEAN PATENT APPLICATION**

(21) Application number: **91116319.4**

(22) Date of filing: **25.09.91**

(51) Int. Cl.[5]: **C08L 69/00**, //(C08L69/00, 51:00,27:18)

(30) Priority: **31.10.90 US 607382**

(43) Date of publication of application: **06.05.92 Bulletin 92/19**

(84) Designated Contracting States: **DE ES FR GB IT NL**

(71) Applicant: **GENERAL ELECTRIC COMPANY**
**1 River Road**
**Schenectady New York 12305(US)**

(72) Inventor: **DeRudder, James Louis**
**1622 Raintree Drive**
**Mount Vernon, Indiana 47620(US)**
Inventor: **Howery, Richard Wilbur**
**RR2, Box 82G**
**Mount Vernon, Indiana 47620(US)**

(74) Representative: **Catherine, Alain**
**General Electric France Service de Propriété**
**Industrielle 18 Rue Horace Vernet**
**F-92136 Issy-Les-Moulineaux Cedex(FR)**

(54) **Polycarbonate compositions with improved appearance and flammability characteristics.**

(57) Thermoplastic molding blends with reduced flammability are made by blending a polycarbonate resin and a drip-reducing, flame retarding amount of a mixture of PTFE and an impact-modifier for a polycarbonate resin. Articles molded from the blends exhibit improved appearance and improved flammability characteristics.

EP 0 483 510 A2

## BACKGROUND OF THE INVENTION

### Field of the Invention

The invention relates to thermoplastically moldable polycarbonate resins and more particularly to a polycarbonate resin composition and the process of preparation, from which polycarbonate articles of improved appearance and flammability may be thermoplastically molded.

### Brief Description of the Prior Art

Polycarbonate resin molding compositions are well known and have been used extensively to mold a wide variety of thermoplastic articles having an equally wide variety of uses.

Articles molded from polycarbonate resins per se are generally transparent or at least non-opaque. Transparency can be affected by the presence of many additives to the resin molding composition, which may otherwise be useful for certain purposes. For example, a commonly employed additive to polycarbonate resin molding compositions is polytetrafluoroethylene (referred to hereinafter at times for convenience as "PTFE"). This additive retards or eliminates "dripping" of molded articles when they are exposed to open flames, thereby improving flame retardant properties under conventional testing procedures. The PTFE is generally added in the form of particles carried in a latex emulsion.

Kress et al. (U.S. Patent 4,649,168; March 10, 1987) describes briefly the difficulty in physically incorporating PTFE into polycarbonate compositions, particularly in respect to obtaining molding compositions which may be processed at high temperatures without resulting in surface streaks on the molded articles. Kress et al. was not concerned with maintaining the optical properties (light transmission, haze, freedom from specks) of the molded articles, but found that their own objective of eliminating surface streaking was achieved by mixing emulsions of halogen-free graft polymers with emulsions of PTFE. The mixed emulsions were then coagulated and the coagulant used as an additive to a halogen-free aromatic polycarbonate. It is said that the intimate mixture of the two emulsions is responsible for elimination of surface streaks in articles thermoplastically molded from the polycarbonate composition.

It has been postulated that the initial latex carried particles of PTFE are elongated into fibrils, by the shearing action that takes place during the mixing of the additive into the high viscosity polymer blend. These elongate fibrils can be viewed as acting on dripping by two different mechanisms. The first mechanism is that the presence of the fibrils increases the very low shear rate viscosity of the polymer matrix, making it appear to be a much higher viscosity material under the shear rates at which dripping occurs. The second mechanism is that the long fibrils physically tie together the polymer matrix, keeping molten polymer from dripping when exposed to a flame. Despite any hypothesis for the mechanism of improved resistance to dripping during flammability testing, it is well known that the presence and amount of long, drawn out PTFE fibrils accounts for improved resistance to dripping during flammability testing. However, addition of PTFE to polycarbonate resin molding compositions adversely affects many properties of the articles molded from them. The properties that can be adversely affected include impact resistance, appearance, and the degree of flammability resistance that can be achieved. One of the primary adverse defects that can occur is due to the presence of PTFE particles that have not been sheared into elongate fibrils. These particles can exist in the polymer matrix as either individual latex carried particles, aggregates of particles, or agglomerates of particles. The unsheared PTFE latex carried particles can: 1). act as flaws to initiate crack propagation (and hence poor impact resistance), 2). act as large optically opaque second phase particles that appear as black spec contamination when viewed in transmission, or 3). appear at the surface of a molded article as surface appearance defects. It is this last problem which apparently was solved by the method described by Kress et al., described above. However, the first two problems have remained as difficulties in the art.

We have discovered a means and a method of introducing PTFE into polycarbonate resin molding compositions, which advantageously results in articles molded therefrom having improved appearance and improved flammability characteristics. The method accomplishes the advantages, apparently, by introducing the PTFE into the resin composition as a thin, homogeneous coating of particles on elastomeric particle surfaces. This seems to eliminate the presence of unsheared PTFE fibrils, particles or aggregates of particles and the consequences of their presence.

It has also been proposed heretofore to coat elastomeric materials such as butadiene-acrylonitrile copolymers with unsintered polytetrafluoroethylene particles by first softening the polymer surface with a solvent and adhering the polytetrafluoroethylene particles to the softened surface; see for example U.S.

Patent 3,200,006. In U.S. Patent 3,511,682 a method is described wherein the elastomer is coated with a thin film of polytetrafluoroethylene and then the film is sintered with an open flame on the elastomer surface.

## SUMMARY OF THE INVENTION

The invention comprises, a thermoplastic molding composition, which comprises;
an aromatic polycarbonate resin; and
a drip-retarding proportion of a mixture consisting essentially of particles of an elastomer impact-modifier for a polycarbonate resin, said particles being coated with polytetrafluoroethylene.

The invention also comprises articles molded from the molding compositions of the invention and the method or process of making fire-retardant, PTFE-containing polycarbonate articles exhibiting improved optical properties and improved resistance to flammability.

The term "drip-retarding" as used herein refers to retardation of the formation of drips from molded articles exposed to open flames.

## DETAILED DESCRIPTION OF THE PREFERRED EMBODIMENTS OF THE INVENTION

Aromatic polycarbonate resins which are thermoplastically moldable are well known, as are methods of their preparation. A common method of preparation is by the interfacial polymerization technique; see for example the details provided in the U.S. Patents 3,028,365; 3,334,154; 3,275,601; 3,915,926; 3,030,331; 3,169,121; 3,027,814; and 4,188,314, all of which are incorporated herein by reference thereto.

In general, the method of interfacial polymerization comprises the reaction of a dihydric phenol with a carbonyl halide (the carbonate precursor).

Although the reaction conditions of the preparative processes may vary, several of the preferred processes typically involve dissolving or dispersing the diphenol reactants in aqueous caustic, adding the resulting mixture to a suitable water immiscible solvent medium and contacting the reactants with the carbonate precursor, such as phosgene, in the presence of a suitable catalyst and under controlled pH conditions. The most commonly used water immiscible solvents include methylene chloride, 1,2-dichloroethane, chlorobenzene, toluene, and the like.

The catalyst employed accelerates the rate of polymerization of the dihydric phenol reactant with the carbonate precursor. Representative catalysts include but are not limited to tertiary amines such as triethylamine, quaternary phosphonium compounds, quaternary ammonium compounds, and the like. The preferred process for preparing polycarbonate resins of the invention comprises a phosgenation reaction. The temperature at which the phosgenation reaction proceeds may vary from below 0°C, to above 100°C. The phosgenation reaction preferably proceeds at temperatures of from room temperature (25°C) to 50°C. Since the reaction is exothermic, the rate of phosgene addition may be used to control the reaction temperature. The amount of phosgene required will generally depend upon the amount of the dihydric phenol and the amount of any dicarboxylic acid also present.

The dihydric phenols employed are known, and the reactive groups are the two phenolic hydroxyl groups. Some of the dihydric phenols are represented by the general formula:

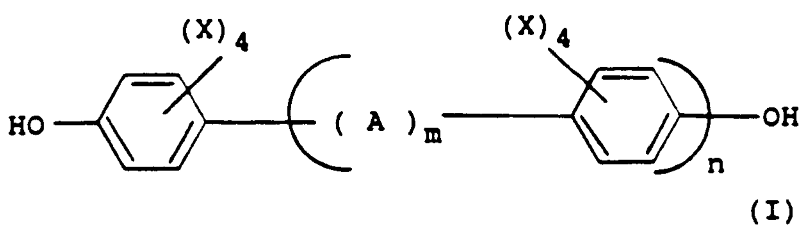

(I)

wherein A is a divalent hydrocarbon radical containing from 1 to about 15 carbon atoms; a substituted divalent hydrocarbon radical containing from 1 to about 15 carbon atoms and substituent groups such as halogen:

$$-S- \; ; \; -S-S- \; ; \; -\underset{\underset{O}{\|}}{\overset{\overset{O}{\|}}{S}}- \; ; \; -S- \; ; \; -O- \; : \text{ or } -\underset{\underset{O}{\|}}{\overset{\overset{O}{\|}}{C}}- \; ;$$

wherein each X is independently selected from the group consisting of hydrogen, halogen, and a monovalent hydrocarbon radical such as an alkyl group of from 1 to about 8 carbon atoms, an aryl group of from 6-18 carbon atoms, an aralkyl group of from 7 to about 14 carbon atoms, an alkaryl group of from 7 to about 14 carbon atoms, an alkoxy group of from 1 to about 8 carbon atoms, or an aryloxy group of from 6 to 18 carbon atoms; and wherein m is zero or 1 and n is an integer of from 0 to 5.

Typical of some of the dihydric phenols that can be employed in the practice of the present invention are bis-phenols such as (4-hydroxyphenyl)methane, 2,2-bis(4-hydroxyphenyl)propane (also known as bisphenol-A), 2,2-bis(4-hydroxy-3,5-dibromophenyl)propane; dihydric phenol ethers such as bis(4-hydroxyphenyl) ether, bis(3,5-dichloro-4-hydroxyphenyl) ether; dihydroxybiphenyls such as p,p'-dihydroxybiphenyl, 3,3'-dichloro-4,4'-dihydroxybiphenyl; dihydroxyaryl sulfones such as bis(4-hydroxyphenyl) sulfone, bis (3,5-dimethyl-4-hydroxyphenyl) sulfone; dihydroxybenzenes such as resorcinol and hydroquinone; halo- and alkyl-substituted dihydroxybenzenes such as 1,4-dihydroxy-2,5-dichlorobenzene and 1,4-dihydroxy-3-methylbenzene; and dihydroxybiphenyl sulfides and sulfoxides such as bis(4-hydroxyphenyl) sulfide, bis(4-hydroxyphenyl) sulfoxide and bis(3,5-dibromo-4-hydroxyphenyl) sulfoxide. A variety of additional dihydric phenols are available and are disclosed in U.S. Pat. Nos. 2,999,835; 3,028,365 and 3,153,008; all of which are incorporated herein by reference. It is, of course, possible to employ two or more different dihydric phenols or a combination of a dihydric phenol with glycol.

The carbonate precursor can be either a carbonyl halide, a diarylcarbonate or a bishaloformate. The carbonyl halides include carbonyl bromide, carbonyl chloride, and mixtures thereof. The bishaloformates include the bishaloformates of dihydric phenols such as bischloroformates of 2,2-bis(4-hydroxyphenyl)-propane, 2,2-bis(4-hydroxy-3,5-dichlorophenyl)propane, hydroquinone, and the like, or bishaloformates of glycols such as bishaloformates of ethylene glycol, and the like. While all of the above carbonate precursors are useful, carbonyl chloride, also known as phosgene, is preferred.

Also included within the scope of the present invention are the high molecular weight thermoplastic randomly branched polycarbonates. These randomly branched polycarbonates are prepared by coreacting a polyfunctional organic compound with the aforedescribed dihydric phenols and carbonate precursor. The polyfunctional organic compounds useful in making the branched polycarbonates are set forth in U.S. Pat. Nos. 3,635,895 and 4,001,184 which are incorporated herein by reference. These polyfunctional compounds are generally aromatic and contain at least three functional groups which are carboxyl, carboxylic anhydrides, phenols, haloformyls or mixtures thereof. Some nonlimiting examples of these polyfunctional aromatic compounds include 1,1,1-tri(4-hydroxyphenyl) ethane, trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, benzophenonetetracarboxylic acid, benzophenonetetracarboxylic anhydride, and the like. The preferred polyfunctional aromatic compounds are 1,1,1-tri(4-hydroxyphenyl)ethane, trimellitic anhydride or trimellitic acid or their haloformyl derivatives. Also included herein are blends of a linear polycarbonate and a branched polycarbonate.

The term "aromatic carbonate polymers" as used herein is inclusive of copolyester-polycarbonates, i.e., resins which contain, in addition to recurring polycarbonate chain units of the formula:

$$\left[ -O-D-O-\overset{\overset{O}{\|}}{C}- \right] \qquad \text{(IIa)}$$

wherein D is a divalent aromatic radical of the dihydric phenol employed in the polymerization reaction, repeating or recurring carboxylate units, for example of the formula:

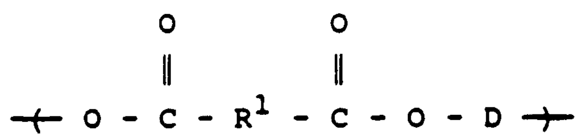

(IIb)

wherein D is as defined above and $R^1$ is as defined below.

The copolyester-polycarbonate resins are also prepared by interfacial polymerization technique, well known to those skilled in the art; see for example the U.S. patents 3,169,121 and 4,487,896.

In general the copolyester-polycarbonate resins are prepared as described above for the preparation of polycarbonate homopolymers, but by the added presence of a dicarboxylic acid (ester precursor) in the water immiscible solvent.

In general, any dicarboxylic acid conventionally used in the preparation of linear polyesters may be utilized in the preparation of the copolyester-carbonate resins of the instant invention. Generally, the dicarboxylic acids which may be utilized include the aliphatic dicarboxylic acids, the aromatic dicarboxylic acids, and the aliphatic-aromatic dicarboxylic acids. These acids are well known and are disclosed for example in U.S. Pat. No. 3,169,121 which is hereby incorporated herein by reference. Representative of such aromatic dicarboxylic acids are those represented by the general formula:

$HOOC-R^1-COOH$ (III)

wherein $R^1$ represents an aromatic radical such as phenylene, naphthylene, biphenylene, substituted phenylene and the like; a divalent aliphatic-aromatic hydrocarbon radical such as an aralkyl or alkaryl radical; or two or more aromatic groups connected through non-aromatic linkages of the formula:

- E -

wherein E is a divalent alkylene or alkylidene group. E may also consist of two or more alkylene or alkylidene groups, connected by a non-alkylene or alkylidene group, connected by a non-alkylene or non-alkylidene group, such as an aromatic linkage, a tertiary amino linkage, an ether linkage, a carbonyl linkage, a silicon-containing linkage, or by a sulfur-containing linkage such as sulfide, sulfoxide, sulfone and the like. In addition, E may be a cycloaliphatic group of five to seven carbon atoms, inclusive, (e.g. cyclopentyl, cyclohexyl), or a cycloalkylidene of five to seven carbon atoms, inclusive, such as cyclohexylidene. E may also be a carbon-free sulfur-containing linkage, such as sulfide, sulfoxide or sulfone; an ether linkage; a carbonyl group; a direct bond; a tertiary nitrogen group; or a silicon-containing linkage such as silane or siloxy. Other groups which E may represent will occur to those skilled in the art. For purposes of the present invention, the aromatic dicarboxylic acids are preferred. Thus, in the preferred aromatic difunctional carboxylic acids, $R^1$ is an aromatic radical such as phenylene, biphenylene, naphthylene, or substituted phenylene. Some non-limiting examples of suitable aromatic dicarboxylic acids which may be used in preparing the poly(ester-carbonate) or polyarylate resins of the instant invention include phthalic acid, isophthalic acid, terephthalic acid, homophthalic acid, o-, m-, and p-phenylenediacetic acid, and the polynuclear aromatic acids such as diphenyl dicarboxylic acid, and isomeric naphthalene dicarboxylic acids. The aromatics may be substituted with Y groups. Y may be an inorganic atom such as chlorine, bromine, fluorine and the like; an organic group such as the nitro group; an organic group such as alkyl; or an oxy group such as alkoxy, it being only necessary that Y be inert to and unaffected by the reactants and the reaction conditions. Particularly useful aromatic dicarboxylic acids are those represented by the general formula:-

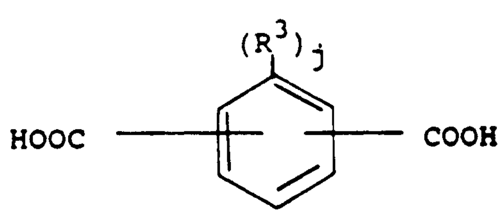

(IV)

wherein j is a positive whole integer having a value of from 0 to 4 inclusive; and each $R^3$ is independently selected from the group consisting of alkyl radicals, preferably lower alkyl radicals (containing from 1 to about 6 carbon atoms).

Mixtures of these dicarboxylic acids may be employed. Therefore, where the term dicarboxylic acid is used herein it is to be understood that this term includes mixtures of two or more different dicarboxylic acids.

Most preferred as aromatic dicarboxylic acids are isophthalic acid, terephthalic acids, and mixtures thereof. A particularly useful difunctional carboxylic acid comprises a mixture of isophthalic acid and terephthalic acid wherein the weight ratio of terephthalic acid to isophthalic acid is in the range of from about 10:1 to about 0.2:9.8.

Rather than utilizing the dicarboxylic acid per se, it is possible, and sometimes even preferred, to employ the reactive derivatives of said acid. Illustrative of these reactive derivatives are the acid halides. The preferred acid halides are the acid dichlorides and the acid dibromides. Thus, for example instead of using isophthalic acid, terephthalic acid or mixtures thereof, it is possible to employ isophthaloyl dichloride, terephthaloyl dichloride, and mixtures thereof.

The proportions of reactants employed to prepare the copolyester-carbonate resins of the invention will vary in accordance with the proposed use of the product resin. Those skilled in the art are aware of useful proportions, as described in the U.S. patents referred to above. In general, the amount of the ester bonds may be from about 5 to about 90 mole percent, relative to the carbonate bonds. For example, 5 moles of bisphenol A reacting completely with 4 moles of isophthaloyl dichloride and 1 mole of phosgene would give a copolyester-carbonate of 80 mole percent ester bonds.

The preferred polycarbonates for use in the present invention are those derived from bisphenol A and phosgene and having an intrinsic viscosity of about 0.3 to about 1.5 deciliters per gram, measured in methylene chloride at 25°C.

The polytetrafluoroethylene resin employed in the process and compositions of this invention is advantageously in a fibrous form.

PTFE is a finely-divided powder or fluff as obtained from the polymerization reaction. Alternatively, the PTFE may be used directly in the form of the emulsion obtained from the reactor. When a mass of this finely-divided, untreated polytetrafluoroethylene resin, of average particle size 0.1 to 0.2 micron, such as that illustrated in Figures 1 and 2 of the article "Teflon" Tetrafluoroethylene Resin Dispersion by J.F. Lontz and W. B. Happoldt, Jr. in Ind. and Eng. Chem. vol. 44, p. 1800, 1952, is sheared by rubbing in the hands, the particles tend to stick together and form a coherent mass. If this mass is drawn out and examined with a microscope at 50-100X, it shows fibers of various sizes. Examination with an electron microscope shows that these fibers are bundles of smaller fibers, many of which consist of strings of the primary particles held together by very fine fibrils having diameters from one-fourth to one-tenth or less of the diameter of the particles. Polytetrafluoroethylene which has been given treatments which cause the particles to adhere and draw out into ultrafine fibrils when they are rubbed together with mechanical shearing, is preferred for use in the practice of this invention.

Microscopic examination of a cross-section of a product of this invention reveals the presence of polytetrafluoroethylene having a generally fibrous structure, although, as is the case when the polytetrafluoroethylene particles alone are rubbed together, many of the finest fibers are below the range of visibility at 100X magnification. Some of the micro-fibrous particles observed in cross-sections of products of this invention are in the form of spiral, spring-like coiled fibers. If desired, the polytetrafluoroethylene particles can be given a micro-fibrous structure before incorporation in the base resin by subjecting them to high rates of shear when dispersed in suitable medium such as oil, or in a process such as water-cutting, whereby micro-fibers having diameters of less than 2 microns are obtained.

The way the Fibrillar PTFE employed in the method and the compositions of the invention is used in the method of the invention is by coating it on discrete particles of an elastomeric impact-modifier for a polycarbonate in a very thin, homogeneous and uniform layer. Simple admixture of the elastomer particles with the PTFE is not enough to obtain the desired product.

Any of the known polycarbonate elastomeric impact modifiers may be used in particle form. Representative of such impact-modifiers are selectively hydrogenated linear, sequential or radial teleblock copolymers of a vinyl aromatic compound (A) and $(A')_n$ and an olefinic elastomer (B) of the A-B-A'; A $(B\text{-}A\text{-}B)_nA$; A $(B\text{-}A)_nB$; or B $[(A\text{-}B_n)B]_4$ type wherein n is an integer of from 1 to 10 inclusive.

The selectively hydrogenated linear block copolymers are well known as are methods of their preparation, and they are commercially available. The selectively hydrogenated linear block copolymers are well known and are described by Haefele et al, U.S. Pat. No. 3,333,024, which is incorporated herein by reference.

Preferred as the particles of elastomeric impact-modifier used in the compositions of the invention are the so-called "ABS" polymers. ABS polymers are defined, for example, in the Modern Plastics Encyclopedia, 1989 edition, page 92, as the family of thermoplastics made from the three monomers acrylonitrile, butadiene and styrene, and more specifically as a mixture (alloy) of styrene-acrylonitrile copolymer with SAN-grafted polybutadiene rubber.

A preferred ABS polymer is an ABS made by emulsion polymerization, rather than by bulk or suspension polymerization which are processes frequently used to manufacture commercial ABS; an ABS made by emulsion polymerization is described in U.S. Pat. 2,820,773 (1958) which is incorporated herein by reference. ABS resins made by emulsion polymerization and having high rubber content are commercially available, for example the following: Novalar made by Nova Polymers, Inc.: A powdered ABS having about 41% butadiene rubber content, a density of 1.04 and a melt flow index of 4.0; and Blendex ® 301 made by General Electric Company: a powdered ABS having about 34% polybutadiene rubber content, a specific gravity of 0.99 by ASTM D-792 Method A-1, and a heat deflection temperature of 172 ° F at 10 mil deflection and 264 psi (annealed) by ASTM D-648.

The most preferred impact modifying ABS polymer is made from a ring-brominated styrene using dibromostyrene as a monomer. This polymer contributes a particularly good balance of physical properties, stability and cost to the compositions of the invention.

The ring-brominated styrenes used to make the ABS interpolymers for use in the invention are themselves well known in the art, and include the various ring position isomers of mono-, di-, tri-, tetra- and pentabromostyrene. Any isomer or mixture of isomers is usable. For reasons of cost, stability, polymerizability, and availability, the di- and tribrominated styrenes are preferred and the dibrominated styrenes most preferred.

The ABS resins made utilizing ring-brominated styrene may be made using all ring-brominated styrene and no unbrominated styrene, but it is preferred that some unbrominated styrene be used. The ABS should have at least 10% content of brominated styrene and preferably at least 20%, relative to total ABS (by weight).

The use of a ring-brominated styrene in preparing ABS is described for example by Arthur et al. in Canadian Patent 1 149 984 (issued July 12, 1983), as well as by Ikeda et al. in Japanese Patent 1987-10689 published Jan. 31, 1978).

Another class of preferred elastomeric polycarbonate resin impact-modifier for use in the present invention is an alkacrylate-(conjugated)diene-styrenic comonomer core/shell copolymer comprising a conjugated diene with a $T_g$ less than or equal to -10°C as the core. The conjugated diene which can be employed as the core includes polymerized butadiene or isoprene, preferably butadiene. The core is from about 50-90 percent of the core/shell polymer, preferably about 55-80 percent (by weight). The core portion of the polymer need not be comprised solely of the polymerized diolefin; however, at least 50 wt. percent of the core is advantageously the polymerized diolefin, e.g. butadiene. Other polymerized monomers which may be present in the core include styrene, butyl acrylate, and other acrylate monomers. The shell material is comprised of a copolymer of an alkyl alkacrylate and a styrenic comonomer. Examples of an alkyl alkacrylate include methyl methacrylate, ethyl methacrylate, butyl methacrylate, and the like. Methyl methacrylate is preferred. Examples of a styrenic comonomer include styrene, alpha-methylstyrene, alpha-ethylstyrene, o, m or p-butyl styrene, o-methylstyrene, p-methylstyrene, p-propylstyrene, l-vinylnaphthalene, and the like. Styrene itself is preferred. Other polymerized monomers which may be present in the shell include acrylates such as methyl or ethyl acrylates. Polymerized methyl methacrylates, with or without styrene as comonomer, are the preferred shell materials. The shell accounts for about 10-50 percent of the core/shell polymer, preferably about 5-25 percent by weight of each of the methyl methacrylate and, optionally, styrene. Crosslinking and grafting agents may also be present in the core and/or shell. Examples of such agents include 1,3-butylene glycol dimethacrylate, allyl acrylate, (meth)acrylic acid vinyl esters, triallyl cyanurate, divinylbenzene, and the like. Acrylonitrile and/or methacrylonitrile are not present in the shell phase of the shell/core polymer employed in this invention.

Specific commercially available elastomeric impact-modifying polymers which can be used in accordance with the invention include KM653 and like products available from Rohm and Haas Chemical Co. KM653 is an MBS (methacrylate-butadiene-styrene polymer) with about 70-73 wt. percent butadiene in the core, 12 wt. percent methyl methacrylate, and 15 wt. percent styrene. There is a sufficient amount of crosslinker to give at least 96.9 percent insolubles in acetone. Kane Ace® B-56, available from Kaneka America or Kanegafuchi, is an MBS with about 66 wt. percent butadiene, 20 wt. percent methyl methacrylate, and 14 wt. percent styrene, and a sufficient amount of crosslinker to give at least 92 percent insolubles in acetone. Other MBS polymers include the Metablen® C Series of impact modifiers (C-201, C-202, C-202C and C-223) commercially available from M&T Chemicals Inc., and the Acryloid® KM and EXL

Series of impact modifiers (KM581, KM436, KM680, EXL2691, EXL2607, and EXL2647) available from Rohm & Haas Chemical Co. The preferred core/shell polymers overall are methyl methacrylate-butadiene-styrene core/shell polymer. The specifically preferred polymer being Kane Ace® B-56 as described above.

Other representative impact-modifiers are the synthetic polymeric resin elastomers such as silicone rubber, polyether rubber and ethylenepropylenediene rubber; diene rubbers, i.e., homopolymers of conjugated dienes having, e.g. 4 to 8 carbon atoms, such as butadiene, isoprene, norbornene, piperylene and chloroprene.

Advantageous to obtaining the most preferred resin compositions of the invention is the use of elastomer particles having average diameters of less than about 4000 nanometers, preferably less than about 400 and most preferably less than about 200. The larger the average diameter of the elastomer particles, the more hindered will be the optical clarity of articles molded from the compositions. Similarly, the proportion of PTFE coated elastomer particles added to the compositions of the invention will also affect haze and optical clarity. Higher proportions of the coated particles will render the molded articles more opaque than lower proportions. The lower proportions may add haze to articles molded therefrom but transparency is generally maintained.

The coating of PTFE on elastomer resin particles is advantageously carried out by the method of the invention. The elastomer in the form of particles of a dry solid and the PTFE in the form of an aqueous suspension of fibrillar particles are brought together in a manner designed to provide a uniform, thin-coating of the PTFE on the elastomer particles. The coating is then dried to remove the PTFE aqueous carrier. In this way, the PTFE is in a dry coating before it is mixed with polycarbonate. The proportions of the two ingredients may be in a weight ratio of from 50:50 to 5:95 (PTFE:elastomer particles), preferably 40:60 to 10:90 and most preferably 30:70 to 20:80.

The PTFE coated elastomer particles are added to the polycarbonate resin in an amount sufficient to drip retard articles molded from the resulting composition. In general, a drip-retarding proportion is within the range of from about 0.02 to 2 percent by weight of the polycarbonate.

The compositions of the invention may be modified by the addition of other types of additives conventionally used in the art of thermoplastics compounding. Such additives can include fillers (such as clay or talc), supplementary delustrants, reinforcing agents (such as glass fibers), impact modifiers, antistats, antioxidants, plasticizers, flow promoters and other processing aids, stabilizers, colorants, mold release agents, supplementary or synergistic flame retardants, ultraviolet screening agents, and the like. Preferably, other additives employed do not affect transparency of the final molded product.

The production of the compositions of the invention is done by any of the blending operations known for the blending of thermoplastics, such as blending in a kneading machine such as a Banbury mixer or an extruder, or solvent blending. The sequence of addition is not critical but all components should be thoroughly blended together. Blending can be done continuously or batchwise. A preferred blending method is melt blending with the use of an extruder, such as a twin screw extruder.

The invention will be better understood with reference to the following examples, which are presented for purposes of illustration rather than for limitation, and which set forth the best mode contemplated for carrying out the invention.

Where stated, the following test procedures were followed:

FLAMMABILITY:

Flammability was tested for by the UL-94 method of Underwriters' Laboratory (March 3, 1988).

The test bars, in accordance with this procedure, are rated either V-O, V-I or V-II based on the results observed on 5 specimens.

LIGHT TRANSMISSION:

Test squares are tested for light transmission in a Gardner XL 10-CDM instrument. The test shows the percentage of incident light transmitted by the test squares using air as a 100% transmission standard.

HAZE:

Haze (%) was determined by ASTM Test method D-1003.

YELLOWING INDEX (Y.I.):

According to ASTM test Method D-1925.

SPECK MEASUREMENTS:

A. TEST CONDITIONS FOR MEASUREMENT OF SPECKS IN TRANSPARENT MOLDED SAMPLES

Speck measurements on transparent materials were made by measuring the number of visually observable black specs within a 1 inch diameter circle on a molded chip that was 0.125 inches thick, using VIR test equipment. The VIR test equipment consisted of a light box and magnifying optics.

The light box was made by placing a 7 inch diameter 20 watt fluorescent light in a metal box, with the plane of the light parallel to and 2 inches from the top of the box. The top of the box was covered with a 0.025 inch thick polyethylene sheet to scatter the light and act as a uniform, disperse light source. The opening on the top of the box was 8 x 10.5 inches. The samples being measured were 4 inch diameter by 0.125 inch thick samples. They were centered on the polyethylene sheet, concentrically with respect to the circular light source.

The magnifying optics consisted of 2x magnification lens that was 5 inches in diameter. In a concentric circle about this lens was a 7 inch diameter 20 watt fluorescent light, identical to the light contained within the light box. This light had a metal shield that reflected light towards the light box and also shielded the users eyes from direct illumination. This was located at the end of a spring loaded arm that allowed for complete flexibility in location of the magnifying lens, with respect to the light box. The magnifying lens was positioned approximately parallel to the light box and approximately 12 inches above it.

Samples were always viewed with the light in the light box being on. Samples were viewed both with the magnifying lens light on and also with it off. This was done to differentiate a speck due to contamination and a speck due to non-dispersed PTFE. Since the PTFE in question was white and opaque, it would appear different (more reflective) when contrasted between only being backlit and being lit from both the front and back. No incidence of contamination related black specs was observed during these tests.

B. TEST CONDITIONS FOR MEASUREMENT OF SPECKS IN OPAQUE MOLDED SAMPLES

Samples were molded into printer housing parts. 25 parts were molded for each material. Parts were all molded under identical conditions. The 25 parts were visually inspected for both black specs and splay.

Notched Izod Impact Strength:

ASTM test method D-256; all specimens were 100% ductile at failure, unless otherwise noted.

Tensile Strength and Elongation

ASTM test method D-638.

Flexural Modulus

ASTM test method D-790.

Kasha Index (KI)

The procedure for determining the Kasha Index is as follows: 7 grams of resin pellets, dried a minimum of 90 minutes at 125°C are added to a modified Tinius-Olsen T3 melt indexer; the temperature in the indexer is maintained at 300°C and the resin is heated at this temperature for 6 minutes; after 6 minutes the resin is forced through a 1.05 mm radius orifice using a plunger of radius 4.7 mm and an applied force of 7.7 kgs; the time required for the plunger to travel 5.1 cm is measured in centiseconds and this is reported as the Kasha Index (KI). The higher the KI the higher the melt viscosity of the resin and the more viscous the resin and, therefore, the more difficult to process.

Preparation 1 (Control Preparation)

A 1:1 by weight powder blend of a polycarbonate resin homopolymer of bisphenol A having an I.V. of from about 0.46 to 0.49 dℓ/g (Lexan ® 145, General Electric Co., Mt. Vernon, In.) and a brominated polycarbonate prepared by polymerizing a 3:1 by weight mixture of bisphenol A: tetrabromobisphenol A (LEXAN® 105b, General Electric Co., supra.) was charged to a paddle mixer fitted with an external steam jacket. The charge was then heated to a temperature of about 100°C with agitation. While maintaining the temperature and with continued agitation a PTFE emulsion (Fluon AD-1, solids content 61.7 percent in a water latex, IC1) is slowly added to bring its final concentration up to 20 percent by weight of the blend. The agitation is continued until the evolution of steam from the mixing blend ceases (about 4 hours).

Preparation 2

Preparation of PTFE/ABS Additive

A suitable vessel was charged with 10 gms of dry particles of Blendex ® 226, a bromine containing ABS made by General Electric Co. using 27% dibromostyrene, 16.7% acrylonitrile, 21% butadiene, and 35.5% styrene. To the charge there is added with mixing 4 gms of a water dispersion (61.7 percent solids) of PTFE; Fluon AD-1, ICI. The resulting mixture was air-dried in a hood for 3 days.

Preparation 3

The procedure of Preparation 2, supra. was repeated except that the Blendex ® 226 as used therein was replaced with an equal weight of (Blendex ® 338, General Electric Company, supra).

Preparation 4

2043 grams of Blendex ® 336 powder was added to a Patterson-Kelley Twin Shell Blender. The blender tumbling and internal mixing rod motions were started. 827.8 grams of PTFE emulsion was added over a period of 10 minutes through a separatory funnel that connected to the rotating mixing bar by a universal joint and plastic tubing. Approximately 500 ml of water was used to insure that all PTFE emulsion was washed into the blender. The wet powder was then dropped in a large aluminum pan and dried overnight at 125°C in an air circulating oven.

Preparation 5

2951 grams of methacrylate-butadiene-styrene (MBS; Kane Ace ® B56 supra. powder was added to a Patterson-Kelley Twin Shell Blender. The blender tumbling and internal mixing rod motions were started. 1195.3 grams of PTFE emulsion was added over a period of 10 minutes through a separatory funnel that connected to the rotating mixing bar by a universal joint and plastic tubing. Approximately 500 ml of water was used to insure that all PTFE emulsion was washed into the blender. The wet powder was then dropped in a large aluminum pan and dried overnight at 125°C in an air circulating oven.

EXAMPLES 1-3

Molding compositions were prepared by melt blending the ingredients indicated in the Table below in a twin screw extruder at a temperature of 220-270°C and at 300 rpm. The blended and extruded material was then pelletized, dried and injection molded at about 240°C to prepare test specimens of about 12.7 cm by 1.25 cm by about 0.15-0.3 cm thick into test disks of about 10 cm in diameter by about 0.3 cm thick. The specimens were tested and the test results are set forth in the Table, below.

The quantity of additive to the polycarbonate resin is given in parts by weight per 100 parts by weight of the resin (phr).

## TABLE I

| Example | 1 | 2 | 3 (Control) |
|---|---|---|---|
| **Composition: (A)** | | | |
| POLYCARBONATE[1] | 100 | 100 | 100 |
| KSS[2] | 0.6 | 0.05 | 0.6 |
| IRGAFOS®168[3] | 0.05 | 0.6 | 0.05 |
| TB-50[4] | 0.6 | - | 0.6 |
| PTFE (Prep. 1, supra.) | - | - | 0.1 |
| PTFE/ABS ADDITIVE[5] | 0.1 | - | - |
| PTFE/ABS ADDITIVE[6] | - | 0.1 | - |
| **PROPERTIES:** | | | |
| YI | 15.0 | 9.3 | 3.6 |
| % TRANSMITTANCE | 83.7 | 85.0 | 86.3 |
| % HAZE | 13.8 | 12.3 | 12.7 |
| KI 6 min @ 250C | 11600 | 11590 | 12030 |
| KI PART 6 min @ 250C | 11450 | 11740 | 11820 |
| FLAMMABILITY, UL94 @ 0.060" | | | |
| AVERAGE FOT* | 3.07 | 1.64 | 2.74 |
| MINIMUM FOT* | 0.8 | 0.7 | 0.8 |
| MAXIMUM FOT* | 11.0 | 3.9 | 7.3 |
| BURNING DRIPS | 14 | 15 | 11 |
| NON-BURNING DRIPS | - | - | 1 |
| NUMBER OF SAMPLES | 15 | 15 | 15 |
| RATING | V-2 | V-2 | V-2 |
| SPECK COUNT | 5 | 1 | 27 |

*Flame Out Time (FOT)

TABLE I (Cont'd)

| Example | 1 | 2 | 3 (Control) |
|---|---|---|---|
| FLAMMABILITY, UL94 @ 0.090" | | | |
| AVERAGE FOT* | 3.55 | 3.10 | 3.48 |
| MINIMUM FOT* | 1.1 | 1.0 | 0.8 |
| MAXIMUM FOT* | 10.8 | 8.3 | 10.2 |
| BURNING DRIPS | 5 | | 4 |
| NON-BURNING DRIPS | 2 | 2 | 4 |
| NUMBER OF SAMPLES | 20 | 20 | 20 |
| RATING | V-2 | V-0 | V-2 |
| FLAMMABILITY, UL94 @ 0.125" | | | |
| AVERAGE FOT* | 2.02 | 1.73 | 2.12 |
| MINIMUM FOT* | 0.8 | 0.7 | 0.8 |
| MAXIMUM FOT* | 5.3 | 4.8 | 6.4 |
| NUMBER OF SAMPLES | 15 | 15 | 15 |
| RATING | V-O | V-O | V-O |

1 p-cumylphenol endcapped polycarbonate resin made by General Electric Company; I.V.-dℓ/gm.

2 Potassium salt of diphenylsulfone sulfonate.

3 an antioxidant, octadecyl 3-(3,5-di-t-butyl-4-hydroxyphenyl) propionate; Ciba-Geigy Corp.

4 A polycarbonate resin prepared by the polymerization of bisphenol-A and tetra-bromobisphenol A in a 3:1 weight ratio (General Electric Co., Mount Vernon, IN.).

5 Preparation 3, supra.

6 Preparation 2, supra.

*Flame Out Time (FOT)

Examples 4-6

The general procedure of Examples 1-3, supra., was repeated except that the composition ingredients employed are as set forth in the Table II, below which includes the test results. The Example 4 is not an example of the invention but is made for comparative purposes, using a PTFE additive outside the scope of the invention.

TABLE II

| EXAMPLE | 4 (CONTROL) | 5 | 6 |
|---|---|---|---|
| COMPOSITION: | | | |
| LEXAN® 125 [1] | 100 | 100 | 100 |
| Emery 3004 [2] | 0.7 | 0.7 | 0.7 |
| CYASORB UV5411 [3] | 0.3 | 0.3 | 0.3 |
| KSS (supra) | 0.3 | 0.3 | 0.3 |
| TB-50 (supra) | 0.2 | 0.2 | 0.2 |
| PTFE (Prep. 1, supra) | 0.45 | - | - |
| PTFE/ABS (Prep. 4, supra) | | 0.45 | |
| PTFE/MBS (Prep. 5, supra) | | | 0.45 |
| PROPERTIES: | | | |
| YI | 16.6 | 17.7 | 17.2 |
| GLOSS @ 60° | 106 | 105 | 104 |
| 1/8" NOTCHED IZOD | 10.2 (60) | 15.6 (100) | 12.4 (80) |
| 1/8" UNNNOTCHED IZOD | 56.8 | 56.7 | 55.2 |
| 1/8" DG IZOD | 37.7 | 37.6 | 37.0 |
| KI 6 min @300C | 2550 | 2420 | 2390 |
| KI PART 6 min @ 300C | 2480 | 2570 | 2280 |
| KI 6 min @250C | | | 16340 |
| KI PART 6 min @ 250C | | | 14800 |
| FLAMMABILITY, UL94 @ 0.060" | | | |
| AVERAGE FOT | 2.3 | 2.3 | 5.5 |
| MINIMUM FOT | 1.0 | 0.9 | 0.7 |
| MAXIMUM FOT | 5.3 | 3.5 | 18.7 |
| RATING | V-O | V-O | V-1 |
| FLAMMABILITY, UL94 @ 0.090" | | | |
| AVERAGE FOT | | 1.3 | 1.2 |
| MINIMUM FOT | | 0.7 | 0.6 |
| MAXIMUM FOT | | 3.2 | 3.1 |
| RATING | | V-O | V-O |

TABLE II (Cont'd)

| EXAMPLE | 4 (CONTROL) | 5 | 6 |
|---|---|---|---|
| PRINTER HOUSING SPLAY TEST, 25 PARTS | | | |
| % BLACK SPECKS | 0 | 0 | 0 |
| % SPLAY TOTAL | 28 | 12 | 8 |
| % LIGHT SPLAY | 16 | 8 | 4 |
| % HEAVY SPLAY | 12 | 4 | 4 |

1 A polycarbonate prepared by the reaction of phosgene and bisphenol-A and having an intrinsic viscosity of from about 0.4 to about 0.50 deciliters/gram (dℓ/g) (LEXAN ® 125; General Electric Co., Mount Vernon, IN.).

2 A polyalphaolefin mold release agent, Emery Chemicals, Inc.

3 An ultra-violet light stabilizer, American Cyanamide Co., Stamford, Connecticut.

## Claims

1. A thermoplastic molding composition, which comprises;
an aromatic polycarbonate resin; and
a drip-retarding proportion of a mixture consisting essentially of particles of an elastomeric impact-modifier for said polycarbonate, coated with polytetrafluoroethylene.

2. The composition of claim 1 wherein the impact modifier is an interpolymer of acrylonitrile, butadiene and styrene, said styrene being a ring-brominated styrene.

3. The composition of claim 1 wherein the content of ring-brominated styrene is at least 10 percent.

4. The composition of claim 1 wherein the impact-modifier is methacrylate-butadiene-styrene interpolymer.

5. The composition of claim 1 wherein the proportion of PTFE/ABS mixture is within the range of from 10 to 40 percent by weight of the PTFE and polycarbonate mixture.

6. The thermoplastic blend of claim 1 wherein said ring-brominated styrene is dibromostyrene.

7. The thermoplastic blend of claim 1 wherein said polycarbonate is made by reacting bisphenol A and phosgene.

8. An article molded from the composition of claim 1.

**9.** A composition useful as a drip retarding additive for polycarbonate resins, which consists essentially of
(i) polytetrafluoroethylene resin; and
(ii) an interpolymer of acrylonitrile, butadiene and a ring brominated styrene.

**10.** The composition of claim 8 wherein the proportions of polytetrafluoroethylene and interpolymer are within the range of from 20 to 30.

**11.** A method of introducing polytetrafluoroethylene into a polycarbonate resin molding composition, which comprises;
coating the polytetrafluoroethylene in the form of fibrillar particles, unto the surface of particles of an elastomer impact-modifier for the polycarbonate resin; and
adding the coated particles to the polycarbonate resin.